# EUROPEAN PATENT APPLICATION

(11) **EP 1 574 949 A1**
(43) Date of publication of application: **14.09.2005**
(21) Application number: 04101035.6
(22) Date of filing: 12.03.2004
(51) Int. Cl.: G06F 9/44

(54) **Method for modifying the software configuration of a computer system**

(71) Applicant: SAP Aktiengesellschaft, 69190 Walldorf (DE)
(72) Inventor: Beg, Ajmal, NSW 2207 Besley North (AU)

(57) **Abstract**

To modify the software configuration of a computer landscape in that a first software component functionally depends on a second software component, a manager (101) receives (401) a notification that a subsequent development stage of the first software component is available. The manager parses (402) a central status file (301) to identify modification conditions for the first software component in relation to the second software component; applies (403) type-specific rules to the conditions to determine an installation decision; and modifies (404) the first software component according to the installation decision.

## Description

### Technical Field

The present invention generally relates to data processing with computer system, computer program and method, and more particularly, relates to modifying a software configuration of the computer system.

### Background Art

Organizations (e.g., companies, government agencies) use computer systems (corporate landscapes) with different software components. The software components cover a wide range, from programs for personal computers (e.g., browsers) to complex business applications (e.g., enterprise resource planning ERP or customer relation management CRM). The functional arrangement (configuration) of such landscapes is typically managed under supervision of the organization.

The software components depend on each other in various relations (e.g., vertical and horizontal dependency) and have different development stages (e.g., releases, versions).

Changes in the stages of software components are familiar to persons in the art by terms like installation, upgrade, update, and de-installation. For example, an upgrade fully or partially replaces an existing old component by a new component.

To stay with the upgrade example, this process can be simplified by automatically connecting the computer (with the old component) to an upgrade server and by executing an upgrade script on the computer. Server and script are conveniently provided by the manufacturer of the component.

### Disclosure of Invention"

### Technical problem

Modifying the component depends on the compliance with conditions in a large area that spans, for example, from dependency relations to business issues. In a landscape with many computers and many components, the complexity of the conditions rises non-linearly with each new stage.

The organization that owns the landscape needs to comply with the conditions. However, managing the landscape might require efforts that exceed cost of its components.

There is an ongoing task to alleviate these and other problems.

### Technical solution

This task is solved by method, system and computer program according to the independent claims. Exemplary implementations are given in the dependent claims.

### Brief Description of Drawings

FIG. 1 illustrates a simplified overview of a computer system that is managed by an organization;

FIG. 2 illustrates a simplified flow chart diagram of a method according to the present invention;

FIG. 3 illustrates a simplified block diagram of components in a first layer and components in a second layer and thereby illustrates vertical dependency;

FIG. 4 illustrates a simplified block diagram of components in the same layer and thereby illustrates horizontal dependency;

FIG 5 illustrates the vertical dependency between the applications and a runtime environment in a further dimension with releases and versions;

FIG. 6 illustrates a portion of the release-version-matrix of FIG. 5 with a release that closes a condition gap;

FIG. 7 is a simplified flowchart diagram with details for implementing the method in view of the vertical dependency;

FIG. 8 illustrates a simplified listing of a status file; and

FIG. 9 illustrates a simplified block diagram of a computer system.

### Best Mode for Carrying Out the Invention

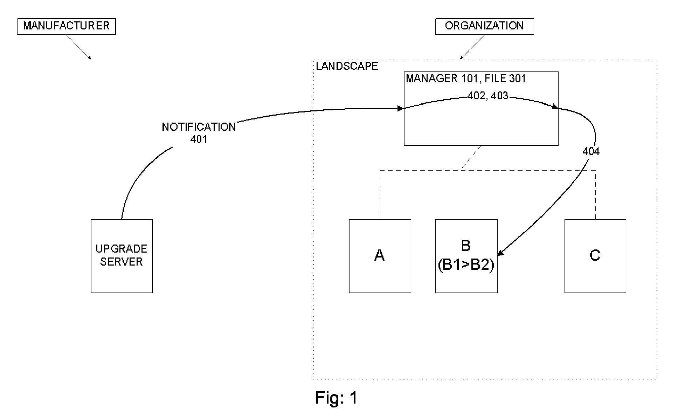

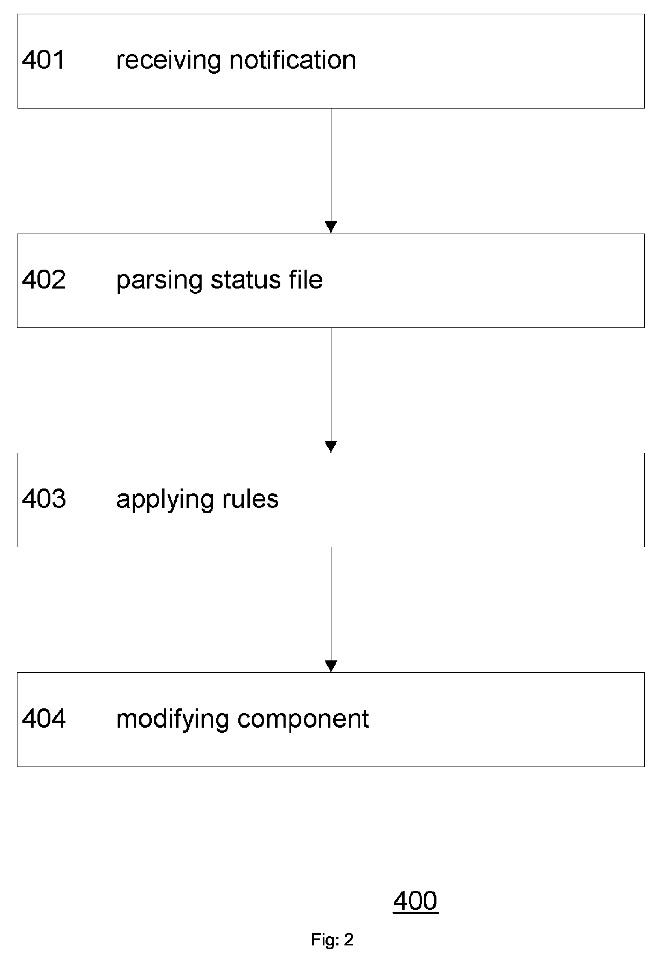

FIG. 1 illustrates a simplified overview of a computer system that is managed by an organization (i.e. corporate landscape on the right side). The landscape has a number of components. A, B and C stand for representative components. Landscape manager 101 and central status file 301 are both software/hardware combinations (modules) that operate according to a method of the present invention. Plain arrows illustrate method steps (cf. FIG. 2). Dashed lines symbolize inter-component connections.

On its left side, the figure symbolizes the upgrade server that is provided by the manufacturer of component B (B1 old, B2 new). The upgrade server is usually not part of the landscape.

In the exemplary landscape, A is a CRM application, B1 (old) and B2 are development stages of a business warehouse application, and C is a Finance application.

According to an exemplary implementation of the method of the invention (cf. FIG. 2), manager 101 receives (cf. step 401) notification that the subsequent stage B2 of component B is available; manager 101 parses (cf. 402) central status file 301; manager 101 applies rules (cf. step 403) and arranges installation of the subsequent stage B2 (cf. step 404).

As mentioned in the background section, there are conditions associated with modifications of the software components, among them:

Point (1), dependency relations are not static, but dynamic. Every modification brings the risk of breaking dependency relations and interrupting the function of one or more components.

Point (2), new stages become available at the discretion of the manufacturer, and not necessarily at the time when the new stage is needed by the organization.

Point (3), looking at the business, there are policies that govern the process. For example, automatic updating is limited to situations where the organization pays license fees to the software manufacturer. Or, the manufacturer focuses on installing new components in the organization; but the organization uses existing components as long as possible.

Point (4), software components can be compatible in some or all functions, so that alternative components can be installed.

FIG. 2 illustrates a simplified flow chart diagram of a method according to the present invention. Method 400 for modifying the software configuration of a computer system generally relates to modifying a first software component (e.g., B) that functionally depends on a second software component (e.g., runtime environment of the landscape). Preferably, the method is executed by manager 101 (cf. FIG. 1).

In step receiving 401, manager 101 receives a notification that a subsequent development stage of the first software component is available.

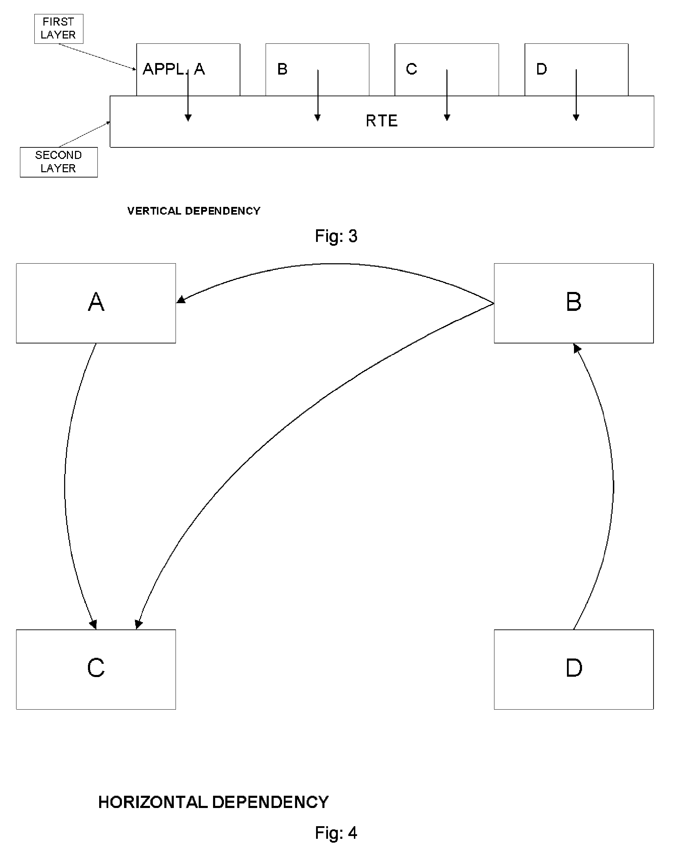

In step parsing 402, manager 101 parses central status file 301 to identify modification conditions for the first software component in relation to the second software component (examples given in FIGS. 3-6).

In step applying 403, manager 101 applies type-specific rules to the conditions to determine an installation decision (cf. FIGS. 3-6).

In step modifying 404, manager 101 modifies the first software component according to the installation decision.

Extracting the modification conditions by parsing a single file has advantages, for example, in having a single point of data entry. Applying the rules reduces the risk of breaking dependency relations and interrupting the function of a component. Further implementations and advantages are explained in the following.

Using the method of the present invention allows the organization to efficiently comply with the above-listed conditions. It is advantageous to classify the conditions into condition types.

For convenience, the following description concentrates in describing an exemplary implementation to comply with the dependency under point (1) with a vertical dependency type (FIG. 3) and a horizontal dependency type (FIG. 4).

Those of skill in the art can apply the underlying principles of the invention to conditions under points (2) to (4) or to other conditions.

FIG. 3 illustrates a simplified block diagram of components in a first layer and components in a second layer. For convenience of explanation, applications A, B, C, D are exemplary first-layer components, und a run-time environment RTE is an exemplary second-layer component. The components in the first layer depend on the component(s) in the second layers. The figure illustrates this so-called vertical dependency by arrows pointing top-down from the applications to the RTE.

A further example for vertical dependency (first-second layer dependency) is, for example, the dependency of an application from the operating system (OS). Further layers can be introduced, for example, a) Java Application - Java Runtime Environment - Operating System; b) Visual Basic Application - Visual Basic Runtime - Operating System. Still further examples are given at the end of the specification.

FIG. 4 illustrates a simplified block diagram of components in the same layer. Some of the components depend on each other. The figure illustrates this so-called horizontal dependency by arrows, for example, A depends on C; B depends on A and C; C is independent; and D depends on B.

While FIGS. 3-4 illustrate dependency at a particular point in time (static view); the next figures consider dependency that changes with the time (dynamic view). This is especially important in connection with stages.

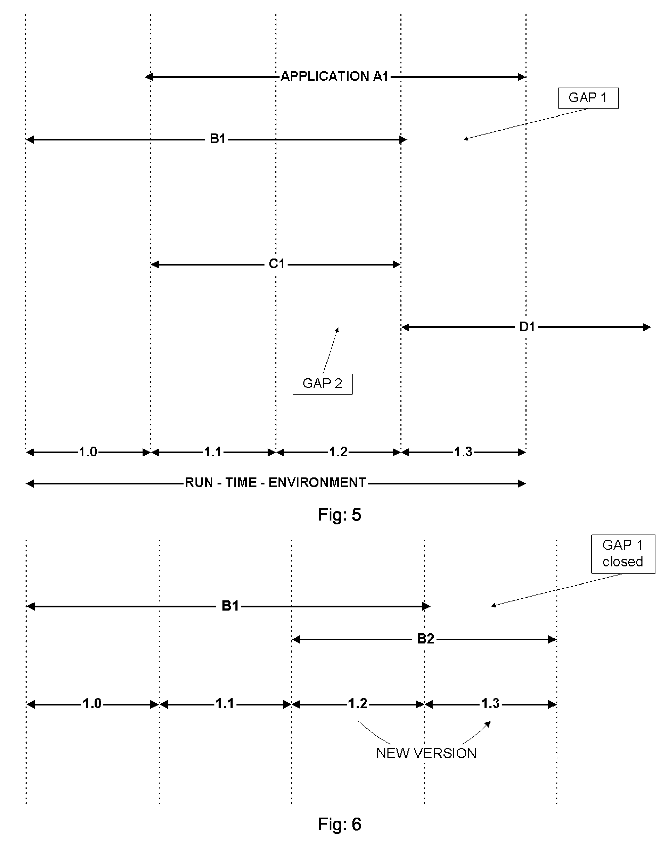

FIG. 5 illustrates the dependency between the applications and the runtime environment (cf. vertical dependency) in an example with different stages. For convenience, the explanation uses the synonyms "release" and "version". As used herein, "releases" are development stages of the applications (generally, the first layer components); and "versions" are development stages of the run-time environment (generally, the second layer components).

The matrix indicates the stages by lines are arranged like a left-to-right time axis. In other words, the figure is a release-version-matrix.

Dependency of an application to the RTE is indicated by plain lines that go in parallel.

Application A in release 1 (i.e. A1) depends on the RTE in version 1.1 to 1.3; the application B in release 1 (i.e. B1) depends on the RTE in version 1.0 to 1.2; the application C in release 1 (i.e. C1) depends on the RTE in version 1.1 to 1.2; the application D in release 1 (i.e. D1) depends on the RTE in version 1.3 (and higher).

Absence of a line indicates non-availability of an application release for the RTE release, for example, B1 is not available for 1.3.

The matrix is also convenient to describe a landscape at any given time frame. Consecutive time frames can be defined between time points when either an application is upgraded or the RTE is upgraded. For convenience of explanation, time frames coincide with the status of the RTE. In the example, during the time frames RTE 1.1 and RTE 1.2, applications A1, B1 and C2 are installed.

The figure also indicates potential problems with changing the stage. Assuming that the current RTE version is 1.2., there are 2 problems related to the vertical dependency condition.

Condition gap 1 represents the first problem: B1 does not operate on RTE version 1.3. That means, if RTE would be updated from 1.2 to 1.3, B1 would no longer operate.

Condition gap 2 represents the second problem: D1 does not operate on RTE version 1.2.

The matrix in FIG. 5 does not consider relations between components in the same layer (cf. FIG. 4). As mentioned, persons of skill in the art can apply the principles as well.

FIG. 6 illustrates a portion of the release-version-matrix with release B2 that would close the condition gap 1. The vertical dependency of B to the RTE is considered. B2 needs a new RTE version.

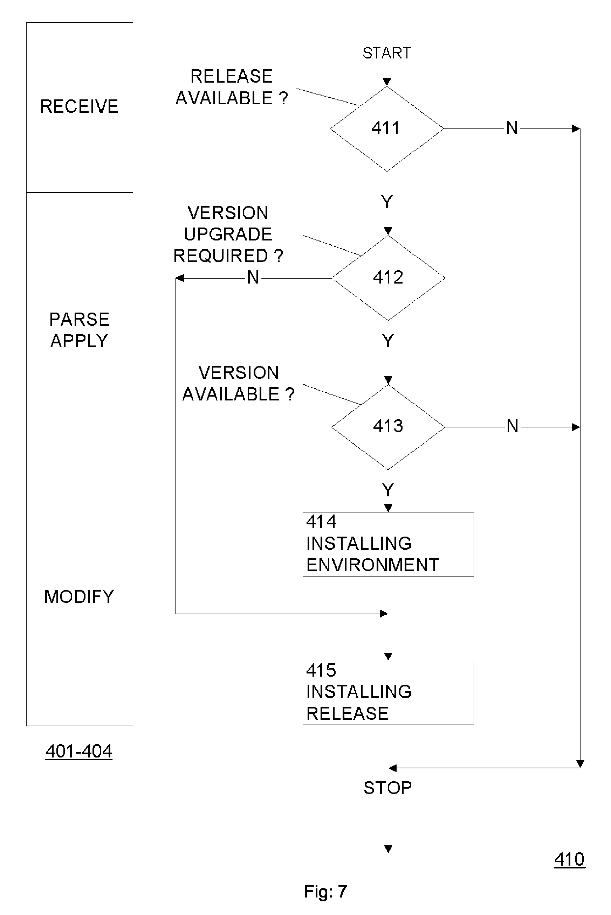

FIG. 7 is a simplified flowchart diagram with details for implementing the method in view of the vertical dependency condition. The boxes on the left side indicate the steps 401-404 of method 400 (cf. FIG. 2). The implementation is referred to as method 410. Taking the example of FIG. 6, manager 101 checks 411 the availability of a new release; parses file 301 to determine 412 the condition that a new version of the RTE is required; applies the rule to check 413 the availability of the new RTE version and to determine an installation order. Having completed the preparations, manager 101 modifies not only the application, but also modifies the RTE. Thereby, manager 101 follows an installation order that is given by the rule: installing 414 the RTE prior to installing 415 the release.

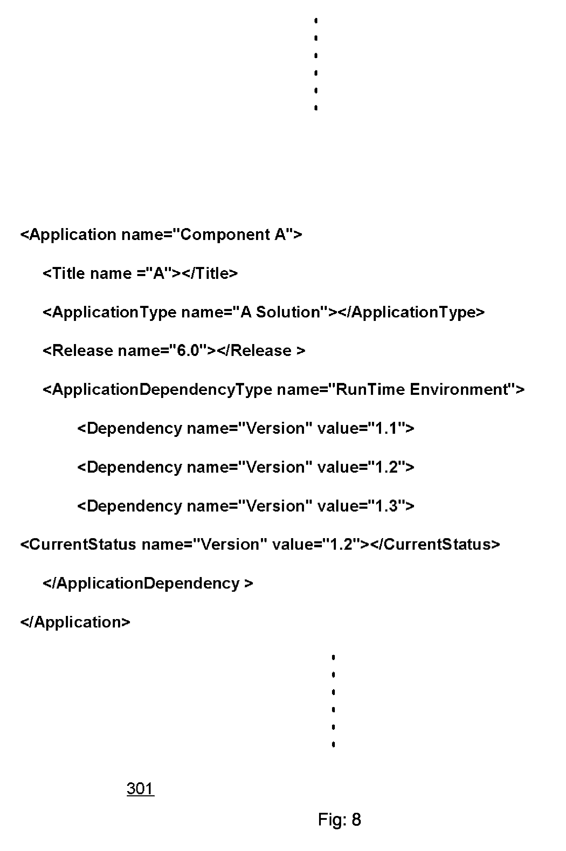

FIG. 8 illustrates a simplified listing of status file 301, in an exemplary dependency description for application A. Vertical ellipses symbolize that dependencies for the other applications in the landscape are listed as well.

Conveniently, file 301 also indicates the current status (here version 1.2)

As in the example, file 301 is provided in XML (Extensible Markup Language). The condition type "vertical dependency" is given by the terms "release" for the first layer component A and "version" for the second layer component B.

Those of skill in the art can implement file 301 in other forms, such as in a database table.

Having described the present invention with its main features, the explanation continues with further alternatives.

Here are the still further examples for vertical relations. For systems that are commercially available from SAP Aktiengesellschaft (Walldorf, Germany), the layers are application and basis kernel as well as database and basis kernel. For systems in general, it is convenient to follow the 7 layers of the Open System Interconnection (OSI) model: application layer 7 to presentation layer 6; presentation layer 6 to session layer 5; session layer 5 to transport layer 4 and so on.

Optionally, the condition type relates to modifying the first software component provided that installation allowance is given. This feature responds to the above-mentioned points 2) and 3) and helps to alleviate the mentioned discrepancy between availability of new development stages and the discretion of the organization to install them (or not). In other words, the organization can implement business rules and policies.

Optionally, receiving notification (step 401) comprises to receive modification conditions for the first software component. This feature allows the manufacturer to indicate conditions and allows the organization (as the owner of the landscape) to simplify the landscape management. The conditions go automatically into file 301.

Optionally, in a further step, manager 101 modifies the status file upon applying the installation decision, for example, before or after modifying the component (cf. installing in FIG. 7). This is especially convenient during so-called going-life-sessions when new application releases are activated in the landscape.

The description closes with describing software and hardware aspects of an exemplary computer system. Landscape manager 101 and central status file 301 (cf. FIGS. 1, 8) can be implemented, for example, by a computer program that operates on one of the network computers.

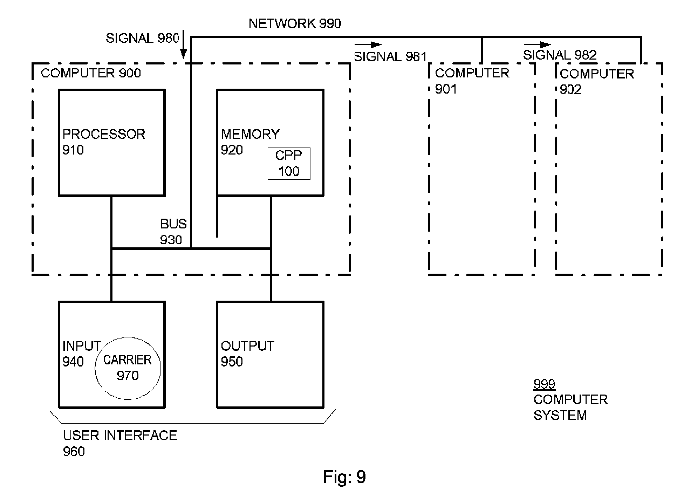

FIG. 9 illustrates a simplified block diagram of exemplary computer system 999 having a plurality of computers 900, 901, 902 (or even more).

Computer 900 can communicate with computers 901 and 902 over network 990. Computer 900 has processor 910, memory 920, bus 930, and, optionally, input device 940 and output device 950 (I/O devices, user interface 960). As illustrated, the invention is implemented by computer program product 100 (CPP), carrier 970 and signal 980.

In respect to computer 900, computer 901/902 is sometimes referred to as "remote computer", computer 901/902 is, for example, a server, a peer device or other common network node, and typically has many or all of the elements described relative to computer 900.

Computer 900 is, for example, a conventional personal computer (PC), a desktop device or a hand-held device, a multiprocessor computer, a pen computer, a microprocessor-based or programmable consumer electronics device, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 has elements that temporarily or permanently store data and instructions. Although memory 920 is illustrated as part of computer 900, memory can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick.

Optionally, memory 920 is distributed. Portions of memory 920 can be removable or non-removable. For reading from media and for writing in media, computer 900 uses well-known devices, for example, disk drives, or tape drives.

Memory 920 stores modules such as, for example, a basic input output system (BIOS), an operating system (OS), a program library, a compiler, an interpreter, and a text- processing tool. Modules are commercially available and can be installed on computer 900. For simplicity, these modules are not illustrated.

CPP 100 has program instructions and - optionally - data that cause processor 910 to execute method steps of the present invention. In other words, CPP 100 can control the operation of computer 900 and its interaction in network system 999 so that is operates to perform in accordance with the invention. For example and without the intention to be limiting, CPP 100 can be available as source code in any programming language, and as object code ("binary code") in a compiled form.

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture having a computer readable medium with computer readable program code to cause the computer to perform methods of the present invention. Further, signal 980 can also embody computer program product 100.

Having described CPP 100, carrier 970, and signal 980 in connection with computer 900 is convenient. Optionally, further carriers and further signals embody computer program products (CPP) to be executed by further processors in computers 901 and 902.

Input device 940 provides data and instructions for processing by computer 900. Device 940 can be a keyboard, a pointing device (e.g., mouse, trackball, cursor direction keys), microphone, joystick, game pad, scanner, or disc drive.

Output device 950 presents instructions and data that have been processed. For example, this can be a monitor or a display, (cathode ray tube (CRT), flat panel display, liquid crystal display (LCD), speaker, printer, plotter, vibration alert device.

Bus 930 and network 990 provide logical and physical connections by conveying instruction and data signals. While connections inside computer 900 are conveniently referred to as "bus 930", connections between computers 900-902 are referred to as "network 990". Optionally, network 990 includes gateways which are computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, electromagnetic, optical or wireless (radio) signals.

Networks are commonplace in offices, enterprise-wide computer networks, intranets and the Internet (e.g., world wide web). Network 990 can be a wired or a wireless network.

### List of reference numbers

- 100: program
- 101: landscape manager
- 301: status file
- 400: method
- 401: receiving
- 402: parsing
- 403: applying
- 404: modifying
- 410: method implementation
- 411: checking
- 412: determining
- 413: checking
- 414: installing
- 415: installing
- 9xx: computer

## Claims

1. Method for modifying the software configuration of a computer system, with modifying a first software component that functionally depends on a second software component, the method (400) comprising: receiving (401) a notification that a subsequent development stage of the first software component is available; parsing (402) a central status file (301) to identify modification conditions for the first software component in relation to the second software component; applying (403) type-specific rules to the conditions in order to determine an installation decision; and modifying (404) the first software component according to the installation decision.

2. The method of claim 1, wherein the conditions have condition types.

3. The method of claim 2, wherein the condition type comprises a condition to modify the first software component that depends on the second software component, wherein the first software component belongs to a first layer and the second software component belongs to a second layer.

4. The method of claim 2, wherein the condition type comprises a condition to modify the first software component that depends on the second software components, wherein both components belong to the same layer.

5. The method of claim 2, wherein the condition type comprises a condition to modify the first software component prior to modifying the second software component.

6. The method of claim 2, wherein the condition type comprises a condition to modify the first software component provided that installation allowance is given.

7. The method of claim 1, comprising the further step of modifying the status file upon applying the installation decision.

8. The method of claim 1, wherein the step receiving (401) notification comprises to receive modification conditions for the first software component.

9. Computer system adapted to perform the method of any of claims 1-8.

10. Computer program comprising program instructions for causing a computer to perform the methods of any of claims 1-8.

11. A computer-readable medium comprising instructions executable on a computer system for performing the methods of any of claims 1-8.
